**Europäisches Patentamt**

**European Patent Office**

**Office européen des brevets**

(19)

(11) Veröffentlichungsnummer: **0 306 849 B1**

# EUROPÄISCHE PATENTSCHRIFT

(12)

(45) Veröffentlichungstag der Patentschrift: **16.12.92**

(51) Int. Cl.5: **B60G 9/00**, B60G 11/46

(21) Anmeldenummer: **88114322.6**

(22) Anmeldetag: **02.09.88**

(54) **Aufhängung für Fahrzeugradachse.**

(30) Priorität: **05.09.87 DE 3729792**

(43) Veröffentlichungstag der Anmeldung:
**15.03.89 Patentblatt 89/11**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**DE-A- 3 148 015**
**DE-B- 2 224 315**
**DE-C- 2 100 048**
**FR-A- 2 529 838**
**GB-A- 1 506 849**

**"Fahrwerktechnik: Radaufhängungen", Prof.
Dipl.-Ing. J. Reimpell, 2. Auflage 1988, Vogel-
Verlag Würzburg**

(73) Patentinhaber: **Otto Sauer Achsenfabrik Keilberg
Hauptstrasse 26
W-8751 Bessenbach-Keilberg(DE)**

(72) Erfinder: **Büttner, Josef c/o KEIL & SCHAAF-
HAUSEN
Patentanwälte Eysseneckstrasse 31
W-6000 Frankfurt am Main 1(DE)**

(74) Vertreter: **Keil, Rainer A., Dipl.-Phys. Dr. et al
KEIL & SCHAAFHAUSEN Patentanwälte Eysseneckstrasse 31
W-6000 Frankfurt am Main 1(DE)**

EP 0 306 849 B1

## Beschreibung

Die Erfindung bezieht sich auf eine Aufhängung für eine einen starren Achskörper aufweisende Fahrzeugradachse, insbesondere Triebachse, mit wenigstens je einem oberen Führungsblatt und wenigtens einem unteren als Parabellenker ausgebildeten Tragblatt beidseits der Fahrzeuglängsmittenebene, welche mit ihrem vorderen Ende an einem vorzugsweise gemeinsamen, z.B. von einem senkrecht zur Fahrzeuglängsmittenebene an dem Chassis angeordneten Lagerbolzen gebildeten, Lagerpunkt des Chassis angelenkt sind und zwischen ihrem vorderen und hinteren Ende, vorzugsweise oberhalb des Achskörpers, mit dem Achskörper verspannt sind, wobei das hintere Ende des Führungsblattes längsverschieblich an dem Chassis gelagert ist und wobei ein von dem Achskörper aus nach hinten ragender Tragarm des Tragblattes das untere Lager einer Luftfeder bildet, auf deren oberem Ende sich das Chassis abstützt. Dies entspricht dem Oberbegriff des Anspruchs 1.

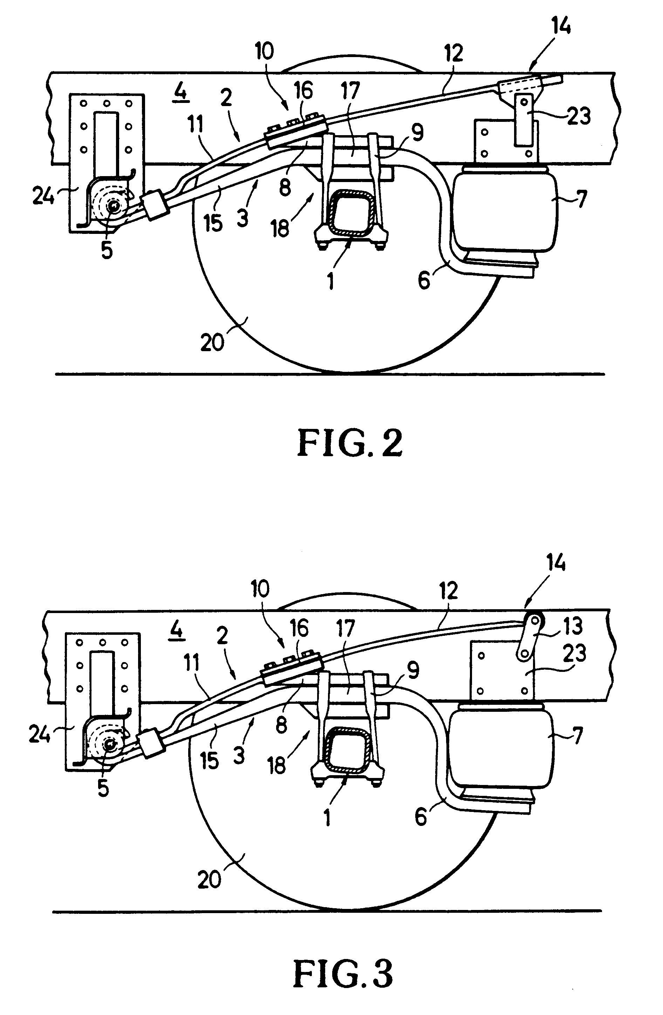

Eine derartige Auchsaufhängung ist beispielsweise aus der DE-C-21 00 048 (Fig. 2) bekannt. Dabei ist der Lagerbolzen für die Aufnahme der vorderen Enden des Führungsblattes und des Tragblattes in erheblichem Abstand oberhalb des Achskörpers am Chassis angebracht. Das Führungsblatt verläuft im wesentlichen horizontal und hat über seine ganze Länge einen gleichbleibenden Querschnitt. Das Tragblatt ist nur in seinem vorderen Abschnitt als Parabelfeder ausgebildet, während ein gesonderter Tragarm mit einer Verlängerung nach vorne über den Achskörper hinausragt und gemeinsam mit dem hinteren Ende des Tragblattes und des Führungsblattes oberhalb des Achskörpers liegend mittels Bügeln mit diesem verspannt sind. Eine derartige Aufhängung hat sich zwar bewährt, sie hat jedoch bedingt durch die zulässige Durchbiegung des Führungsblattes einen begrenzten Federweg gemessen an dem Achskörper von etwa 180 mm. Der Achskörper federt ferner in einem Kreisbogen um den vorderen Federlagerpunkt vorne. Die Achse entwickelt daher bei einseitigem Einfedern ein Eigenlenkverhalten. Außerdem verändert sich bei einer Triebachse während des Einfederns der Kardanwellenwinkel zwischen vorderem und hinterem Gelenk, was unerwünscht ist. Ferner kann es auch zu Verschiebbewegungen im Schiebestück der Kardanwelle kommen, was zu einem erhöhten Verschleiß führt. Die Baulänge des bekannten Triebachsluftfederbausatzes ist außerdem verhältnismäßig groß, was insbesondere für Sattelzugmaschinen hinderlich ist. Da der vordere Federlagerpunkt von Führungsblatt und Tragblatt verhältnismäßig hoch oberhalb des Achskörpers liegt, entsteht ein Aushebeeffekt bei Rückwärtsbremsfahrt.

Hiervon ausgehend liegt der Erfindung die Aufgabe zugrunde, eine Aufhängung für eine Fahrzeugradachse der gattungsgemäßen Art zu schaffen, welche eine bessere Kinematik aufweist, einen geringeren Platzbedarf hat und insgesamt leichter ausgebildet ist.

Diese Aufgabe wird erfindungsgemäß im wesentlichen dadurch gelöst, daß der Lagerpunkt etwa auf der Höhe des Achskörpers z.B. auf der Höhe der Mittelachse des Achskörpers liegt und daß die Haupterstreckungsrichtung des Führungsblattes von vorne unten nach hinten oben schräg verläuft. Hierdurch erhält man gleichzeitig mehrere Vorteile. Aufgrund der niedrigeren Anordnung des Lagerpunktes hat die Aufhängung kein Eigenlenkverhalten mehr. Dadurch daß das Führungsblatt im wesentlichen von vorne unten nach hinten oben schräg verläuft, wird bei gleicher Länge des Führungsblattes die Baulänge der Aufhängung kürzer.

Der Balg der Luftfeder erhält eine bessere Kinematik (besseres Abrollverhalten) und es wird mehr Bodenfreiheit unter dem Balg der Luftfeder gewonnen, da eine höhere Anordnung möglich ist.

Für die Bälge der Luftfedern und für die hintere Federlagerung ist nur ein Querträger erforderlich. Bei Rückwärtsbremsfahrt erfolgt kein Anheben des Fahrzeuges und das Führungsblatt kann leichter ausgebildet werden als bisher. Da der vordere Lagerpunkt von Führungsblatt und Tragblatt etwa auf Höhe des Achskörpers und damit auf Höhe der Kardanwelle liegt, wird der Verschiebeweg der Kardanwelle vermindert.

Gemäß einer Weiterbildung des Erfindungsgedankens ist das Führungsblatt gesondert von dem Tragblatt mittels eines vorzugsweise plattenförmigen Spannelements vor dem Achskörper mit dem Achskörper verspannt. Dadurch, daß die Einspannung des Führungsblattes gegenüber der eigentlichen Achseinspannung nach vorn verlegt ist, wird bei gleicher Biegelänge des Führungsblattes die Baulänge der Aufhängung kürzer. So ist beispielsweise ohne weiteres ein geringerer Platzbedarf nach hinten von ca. 300 mm bei gleichbleibender Biegelänge möglich. Die Biegelänge des hinter der Einspannung des Führungsblattes liegenden Armes des Führungsblattes wird vergrößert und die Biegespannung verringert. Dadurch wird der Gesamthub der Aufhängung bei gleicher Biegespannung des Führungsblattes größer, beispielsweise bis zu 50 mm. Die vom Tragblatt damit gesonderte Einspannung des Führungsblattes erlaubt es nummehr, ein Führungsblatt von beispielsweise 100 mm Breite bei 90 mm breiter Achseinspannung zu verwenden. Der Zwischenbock für die Einspannung des Achskörpers an dem Tragblatt und dem hinteren Teil des Spannelements kann dementsprechend kleiner und leichter und beispielsweise gleichzeitig als Achslappen ausgebildet sein.

Dabei ist vorzugsweise der hintere Teil des Spannelements und das Tragblatt gemeinsam mittels Spannbügel mit dem Achskörper auf einfache Weise verspannt.

Der vor der Einspannung des Führungsblattes liegende Arm des Fuhrungsblattes hat vorzugsweise über seine Länge im wesentlichen gleichbleibenden Querschnitt. Dieser Arm ist, wenn die Einspannung des Führungsblattes erfindungsgemäß vor den Achskörper verlegt ist, geringeren Knickbeanspruchungen ausgesetzt, wenn Schub- und Zugkräfte übertragen werden.

Ferner ist der hinter der Einspannung des Führungsblattes liegende Arm des Führungsblattes vorzugsweise als Parabelfeder ausgebildet.

Für die Schräglage des Führungsblattes gibt es verschiedene Ausführungsbeispiele. Während das Führungsblatt mit gleichbleibender Schräglage vom vorderen Lagerpunkt bis zur hinteren Lagerung verlaufen kann, ist es u.U. zweckmäßig, daß der vordere Arm des Führungsblattes etwas stärker geneigt ist, als der hintere Arm des Führungsblattes, um das Einfederverhalten zu verbessern.

Das Federblatt kann dabei wenigstens über einen Teil seiner Länge leicht gekrümmt sein, und zwar von dem Achskörper aus gesehen konkav.

Bei einer weiteren vorteilhaften Ausgestaltung der Erfindung verläuft wenigstens der vorderste Abschnitt des Führungsblattes parallel zum vorderen Arm des Tragblattes, wodurch eine geringere Verschiebung der Endabschnitte von Führungsblatt und Tragblatt im Federauge am Lagerpunkt und damit ein geringerer Verschleiß eintritt. Zu diesem Zweck kann wenigstens der vorderste Abschnitt des Führungsblattes an dem Tragblatt anliegen.

Noch günstiger ist es dabei, wenn der vordere Arm des Führungsblattes über einen wesentlichen Teil seiner Länge parallel zu dem vorderen Arm des Tragblattes verläuft.

Ferner ist es bei einer anderen Ausgestaltung des Erfindungsgedankens möglich, daß der vordere Arm des Führungsblattes von vorn nach hinten schräg ansteigt und der hintere Arm des Führungsblattes nahezu horizontal verläuft. Die Verringerung der Baulänge und die günstigere Höhenlage der Luftfeder werden hierbei bereits durch die Schräglage des vorderen Arms des Führungsblattes erreicht.

Das Führungsblatt kann auch in einem Zwischenabschnitt seiner Länge eingespannt sein, welcher steiler von vorn nach hinten schräg ansteigt als der vordere Arm und/oder der hintere Arm des Führungsblattes, so daß das hintere Ende des Führungsblattes selbst bei im wesentlichen horizontalem Verlauf des hinteren Armes des Führungsblattes die erforderliche Höhenlage relativ zum Achskörper erhält.

Bei der bekannten Achsaufhängung verläuft der mittlere, der Einspanung dienende Zwischenabschnitt des Tragblattes bereits im wesentlichen horizontal und der hintere Tragarm des Tragblattes ist etwa S-förmig von seiner Einspannung aus nach hinten unten abgebogen. Im Rahmen der vorliegenden Erfindung wird nun zusätzlich vorgeschlagen, daß der vordere Arm des Tragblattes von vorne nach hinten schräg ansteigt. Hierdurch wird bei der gewünschten Schräglage des Führungsblattes die Gesamtbauhöhe der Aufhängung in gewünschtem Maß verringert.

Ein weiteres Erfindungsmerkmal besteht darin, daß das Spannelement für das Führungsblatt ein Gelenk mit senkrecht zur Fahrzeugmittenlängsebene verlaufender Gelenkachse aufweist. Hierdurch kann bei gleicher Biegespannung des Führungsblattes der Federweg nochmals vergrößert werden.

Die vorderen Enden von Führungsblatt und Tragblatt sind vorzugsweise fest aneinanderliegend aufgerollt, d.h. der Innendurchmesser des Federauges des Tragblattes ist gleich dem Außendurchmesser des Federauges des Führungsblattes, um die Längsführung der Achse vom Führungsblatt auf das Tragblatt zu übertragen.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung.

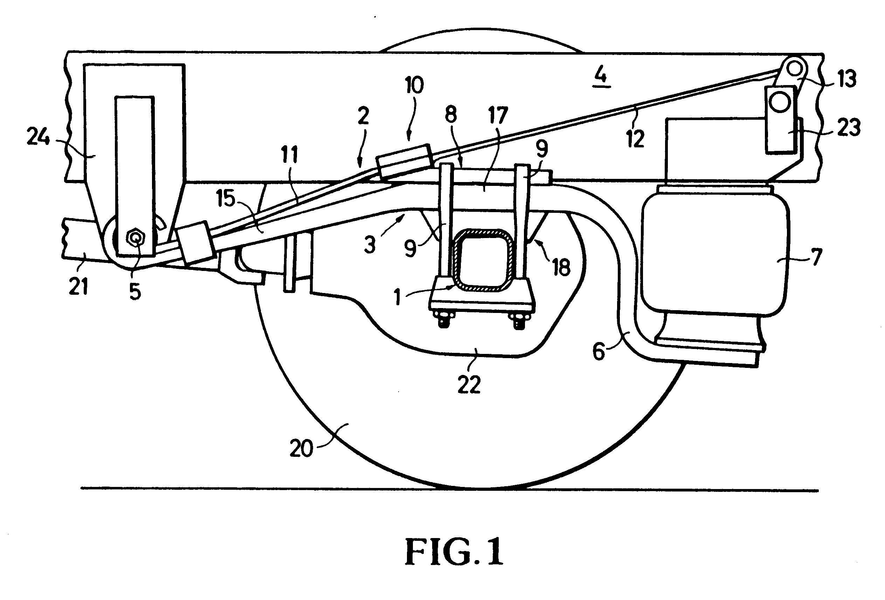

Die Fig. 1 bis 6 veranschaulichen schematisch in Seitenansicht verschiedene Ausgestaltungen der die Erfindung aufweisenden Aufhängung für eine Fahrzeugradachse. Aufgrund der Seitenansicht sind jeweils nur die auf der einen Fahrzeugseite angeordneten erfindungsgemäßen Bauelemente sichtbar. Auf der anderen nicht sichtbaren Fahrzeugseite sind symmetrisch zur Fahrzeuglängsmittenebene entsprechende Bauelemente vorgesehen.

Die Achsaufhängung gemäß Fig. 1 ist für eine Triebachse mit einem als Achsrohr ausgebildeten Achskörper 1 bestimmt, welcher die Räder 20 trägt. Der Antrieb der Räder 20 erfolgt von einer Kardanwelle 21 aus über ein Getriebe 22. Die Achsaufhängung weist beiderseits der Fahrzeuglängsmittenebene je ein oberes Führungsblatt 2 und je ein unteres Tragblatt 3 auf, wobei das Tragblatt 3 einen Parabellenker bildet. Führungsblatt 2 und Tragblatt 3 sind mit ihrem vorderen Ende um einen gemeinsamen von einem senkrecht zur Fahrzeuglängsmittenebene am Chassis 4 angeordneten Lagerbolzen gebildeten Lagerpunkt 5 des Chassis 4 angelenkt. Führungsblatt 2 und Tragblatt 3 verlaufen beide nach hinten über den Achskörper 1. Sowohl Führungsblatt 2 als auch Tragblatt 3 sind zwischen ihrem jeweiligen vorderen und ihrem jeweiligen hinteren Ende starr mit dem Achskörper 1 verspannt, und zwar das Tragblatt 3 mit einem mittleren im wesentlichen horizontalen Zwischenabschnitt 17 über Spannbügel 9 unmittelbar mit dem Achskörper 1 in der Einspannung 18. Mittels der Spannbügel 9 wird auch der hintere Teil eines Spannelements 8 in der Einspannung 18 erfaßt, welches Spannelement 8 zur Schaffung einer gesonderten Einspannung 10 des Führungsblattes 2 vorgesehen ist. Der vordere Lagerpunkt 5 liegt etwa auf der Höhe des Achskörpers 1 insbesondere dessen Mittelachse. Das hintere Ende des Führungsblattes 2 ist längsverschieblich mittels eines am Chassis 4 schwenkbaren Schekels 13 gelagert. Die Lagerung liegt derart im Abstand oberhalb des Achskörpers 1, daß die Haupterstreckungsrichtung des Führungsblattes 2 von vorne unten nach hinten oben insgesamt schräg verläuft. Dabei hat der vordere, vor der Einspannung 10 liegende Arm 11 des Führungsblattes 2 eine etwas stärkere Neigung als der hintere, hinter der Einspannung 10 liegende Arm 12 des Führungsblattes 2. Ein vom Achskörper 1 aus nach hinten ragender Tragarm 6 des Tragblattes 3 bildet das untere Lager einer Luftfeder 7, auf deren oberem Ende sich das Chassis 4 abstützt. Der vordere, vor der Einspannung 18 liegende Arm 15 des Tragblattes 3 verläuft vom vorderen Lagerpunkt 5 ebenfalls schräg nach hinten oben, jedoch etwas flacher als der vordere Arm 11 des Führungsblattes 2. Der vordere Arm 11 des Führungsblattes 2 hat über seine gesamte Länge einen gleichbleibenden Querschnitt. Der hintere Arm 12 des Führungsblattes 2 ist als Parabelfeder ausgebildet. Der hintere Tragarm 6 des Tragblattes 3 ist etwa S-förmig von seiner Einspannung 18 aus nach hinten unten abgebogen. Der vordere Arm 15 des Tragblattes 3 ist als Parabelfeder ausgebildet.

Das Ausführungsbeispiel von Fig. 2 unterscheidet sich von demjenigen in Fig. 1 veranschaulichten im wesentlichen durch folgende Merkmale: Das Führungsblatt 2 ist insbesondere im Bereich seines vorderen Armes 11 zunächst leicht gekrümmt, und zwar vom Achskörper 1 aus gesehen konkav. Der vorderste Abschnitt des vorderen Armes 11 des Führungsblattes 2 ist nach unten abgekröpft und verläuft dadurch parallel unmittelbar an dem vorderen Abschnitt des vorderen Arms 15 des Tragarmes 3 anliegend. Das hintere Ende des Führungsblattes 2 ist in einem Gleitschuh 14 aufgenommen, welcher wie das Schekel 13 gemäß Fig 1 an einem hinteren Lagerbock 23 gehalten wird.

Die Ausführungsform gemäß Fig. 3 unterscheidet sich von derjenigen gemäß Fig. 2 im wesentlichen nur dadurch, daß das hintere Ende des Führungsblattes 2 an einem schwenkbaren Schekel 13 angelenkt ist.

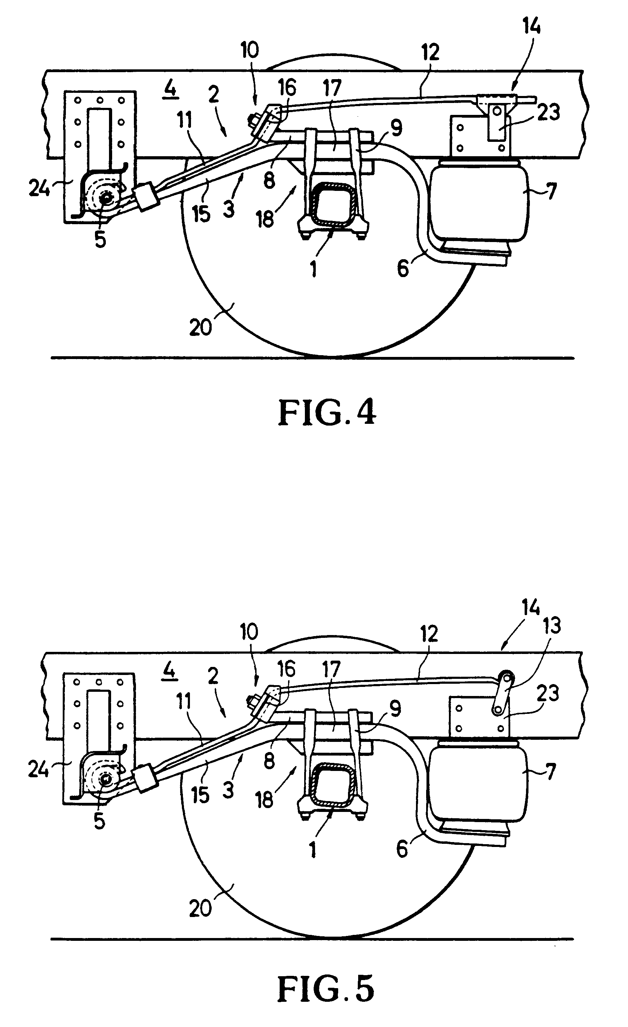

Bei der Ausführungsform von Fig. 4 verläuft der gesamte vordere Arm 11 des Führungsblattes 2 im wesentlichen parallel zum vorderen Arm 15 des Tragblattes 3, wobei wiederum der vorderste Abschnitt des vorderen Armes 11 unmittelbar an dem vordersten Abschnitt des vorderen Armes 15 anliegt. Die Einspannung 10 des Führungsblattes 2 ist in einem Zwischenabschnitt 16 vorgenommen, welcher steiler als der vordere Arm 11 des Führungsblattes 2 von vorne unten nach hinten oben verläuft. Der sich an den Zwischenabschnitt 16 anschließende hintere Arm 12 des Führungsblattes 2 verläuft im wesentlichen horizontal bzw mit leichter konkaver Krümmung nur geringfügig ansteigend bis zur Aufnahme seines hinteren Endes in einem Gleitschuh 14.

Das Ausführungsbeispiel von Fig. 5 entspricht im wesentlichen demjenigen von Fig. 4, ausgenommen daß hier das hintere Ende des Führungsblattes 2 an einem schwenkbaren Schekel 13 angelenkt ist.

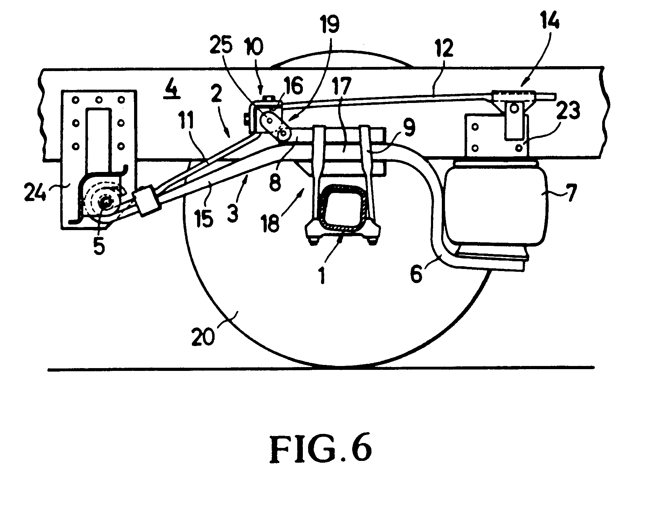

Die Besonderheit der Ausführungsform gemäß Fig. 6 besteht darin, daß das Einspannelement 8 aus einem vorderen Teil und einem hinteren Teil besteht, die über Gelenklaschen 25 miteinander verbunden sind. Der hintere im wesentlichen plattenförmige Teil des Spannelements 8 ist wie bei den anderen Ausführungsformen mit den Spannbügeln 9 mit dem Zwischenabschnitt 17 des Tragblattes 3 und dem Achskörper 1 in der Einspannung 18 zusammengefaßt. Der vordere Teil des Spannelements 8 nimmt den in diesem Fall abgewinkelten Zwischenabschnitt 16 des Führungsblattes 2 auf. Der vordere Arm 11 läuft ähnlich schräg auf den vorderen Arm 15 des Tragblattes 3 zu, wie dies in Fig. 1 der Fall ist, der vorderste Abschnitt des vorderen Arms 11 läuft jedoch wiederum parallel anliegend an dem vordersten Abschnitt des vorderen Armes 15 des Tragplattes 3. Der hintere Arm 12 des Führungsblattes 2 läuft wieder im wesentlichen horizontal bzw. nur geringfügig ansteigend und mündet mit seinem hinteren Ende in einen Gleitschuh 14. Die vorderen Enden von Führungsblatt 2 und Tragblatt 3 sind in ihrem vorderen Federauge fest aneinanderliegend aufgerollt und werden von dem den Lagerpunkt 5 bildenden Lagerbolzen durchsetzt, welcher an einem vorderen Lagerbock 22 angebracht ist.

Bezugszeichenliste:

| | |
|---|---|
| 1 | Achskörper |
| 2 | Führungblatt |
| 3 | Tragblatt |
| 4 | Chassis |
| 5 | Lagerpunkt |
| 6 | Tragarm |
| 7 | Luftfeder |
| 8 | Spannelement |
| 9 | Spannbügel |
| 10 | Einspannung |
| 11 | vorderer Arm |
| 12 | hinterer Arm |
| 13 | Schekel |

14 Gleitschuh
15 vorderer Arm
16 Zwischenabschnitt
17 Zwischenabschnitt
18 Einspannung
19 Gelenk
20 Rad
21 Kardanwelle
22 Getriebe
23 hinterer Lagerbock
24 vorderer Lagerbock
25 Gelenklasche

**Patentansprüche**

1. Aufhängung für eine einen starren Achskörper (1) aufweisende Fahrzeugradachse, insbesondere Triebachse, mit wenigstens je einem oberen Führungsblatt (2) und wenigstens je einem unteren als Parabellenker ausgebildeten Tragblatt (3) beidseits der Fahrzeuglängsmittenebene, welche mit ihrem vorderen Ende an einem vorzugsweise gemeinsamen, z.B. von einem senkrecht zur Fahrzeuglängsmittenebene an dem Chassis (4) angeordneten Lagerbolzen gebildeten, Lagerpunkt (5) des Chassis (4) angelenkt sind und zwischen ihrem vorderen und hinteren Ende, vorzugsweise oberhalb des Achskörpers (1), mit dem Achskörper (1) verspannt sind, wobei das hintere Ende des Führungsblattes (2) längsverschieblich an dem Chassis (4) gelagert ist und wobei ein von dem Achskörper (1) aus nach hinten ragender Tragarm (6) des Trageblattes (3) das untere Lager einer Luftfeder (7) bildet, auf deren oberem Ende sich das Chassis (4) abstützt, dadurch gekennzeichnet, daß der Lagerpunkt (5) etwa auf der Höhe des Achskörpers (1) liegt und daß die Haupterstreckungsrichtung des Führungsblattes (2) von vorne unten nach hinten oben schräg verläuft.

2. Aufhängung nach Anspruch 1, dadurch gekennzeichnet, daß das Führungsblatt (2) gesondert von dem Tragblatt (3) mittels eines vorzugsweise plattenförmigen Spannelements (8) vor dem Achskörper (1) mit dem Achskörper (1) verspannt ist.

3. Aufhängung nach Anspruch 2, dadurch gekennzeichnet, daß der hintere Teil des Spannelements (8) und das Tragblatt (3) gemeinsam mittels Spannbügel (9) mit dem Achskörper (1) verspannt sind.

4. Aufhängung nach einem der Ansprüche 1 bis 3, dadurch gekennzeichnet, daß der vor der Einspannung (10) des Führungsblattes (2) liegende Arm (11) des Führungsblattes (2) über seine Länge im wesentlichen gleichbleibenden Querschnitt hat.

5. Aufhängung nach einem der Ansprüche 1 bis 4, dadurch gekennzeichnet, daß der hinter der Einspannung (10) des Führungsblattes (2) liegende Arm (12) des Führungsblattes (2) als Parabelfeder ausgebildet ist.

6. Aufhängung nach einem der Ansprüche 1 bis 5, dadurch gekennzeichnet, daß das hintere Ende des Führungsblattes (2) an einem schwenkbaren Schekel (13 ) angelenkt oder in einem Gleitschuh (14) aufgenommen ist.

7. Aufhängung nach einem der Ansprüche 1 bis 6, dadurch gekennzeichnet, daß der vordere Arm (11) des Führungsblattes (2) etwas stärker geneigt ist als der hintere Arm (12) des Führungsblattes (2).

8. Aufhängung nach einem der Ansprüche 1 bis 7, dadurch gekennzeichnet, daß das Führungsblatt (2) wenigstens über einen Teil seiner Länge leicht gekrümmt ist, und zwar von dem Achskörper (1) aus gesehen konkav.

9. Aufhängung nach einem der Ansprüche 1 bis 8, dadurch gekennzeichnet, daß wenigstens der vorderste Abschnitt des Führungsblattes (2) parallel zum vorderen Arm (15) des Tragblattes (3) verläuft.

10. Aufhängung nach einem der Ansprüche 1 bis 9, dadurch gekennzeichnet, daß wenigstens der vorderste Abschnitt des Führungsblattes (2) an dem Tragblatt (3) anliegt.

11. Aufhängung nach einem der Ansprüche 1 bis 10, dadurch gekennzeichnet, daß der vordere Arm (11) des Führungsblattes (2) über einen wesentlichen Teil seiner Länge parallel zu dem vorderen Arm (15) des Tragblattes (3) verläuft.

12. Aufhängung nach einem der Ansprüche 1 bis 11, dadurch gekennzezchnet, daß der vordere Arm (11) des Führungsblattes (2) von vorn nach hinten schräg ansteigt und der hintere Arm (12 ) des Führungsblattes (2) nahezu horizontal verläuft.

13. Aufhängung nach einem der Ansprüche 1 bis 12, dadurch gekennzeichnet, daß das Führungsblatt (2) in einem Zwischenabschnitt (16) seiner Länge eingespannt ist, welcher steiler von vorne nach hinten schräg ansteigt als der vordere Arm (11) und/oder der hintere Arm (12) des Führungsblattes (2).

14. Aufhängung nach einem der Ansprüche 1 bis 13, wobei ein mittlerer der Einspannung dienender Zwischenabschnitt (17) des Tragblattes (3) im wesentlichen horizontal verläuft und der hintere Tragarm (6) des Tragblattes (3) etwa S-förmig von seiner Einspannung (18) aus nach hinten unten abgebogen ist, dadurch gekennzeichnet, daß der vordere Arm (15) des Tragblattes (3) von vorne nach hinten schräg ansteigt.

15. Aufhängung nach einem der Ansprüche 2 bis 14, dadurch gekennzeichnet, daß das Spannelement (8) für das Führungsblatt (2) ein Gelenk (19) mit senkrecht zur Fahrzeugmittenlängsebene verlaufender Gelenkachse aufweist.

16. Aufhängung nach einem der Ansprüche 1 bis 15, dadurch gekennzeichnet, daß die vorderen Enden von Führungsblatt (2) und Tragblatt (3) fest aneinanderliegend aufgerollt sind.

**Claims**

1. Suspension for a vehicle-wheel axle having a rigid axle body (1), in particular for a drive axle, with at least in each case an upper guide plate (2) and at least in each case a lower support plate (3) constructed as parabolic guide on both sides of the longitudinal centre plane of the vehicle, which are hinged with their front end to a bearing point (5) of the chassis (4) which is preferably common, for example formed by a bearing bolt arranged perpendicularly to the longitudinal centre plane of the vehicle on the chassis (4), and are braced with the axle body (1) between their front and rear end, preferably above the axle body (1), whereby the rear end of the guide plate (2) is mounted on the chassis (4) in a longitudinally displaceable manner and whereby a support arm (6) of the support plate (3) which projects to the rear from the axle body (1) forms the lower bearing of an air spring (7), on the upper end of which the chassis (4) is supported, characterized in that the bearing point (5) lies approximately at the level of the axle body (1) and in that the main direction of extension of the guide plate (2) extends from the front bottom to the rear top in a sloping manner.

2. Suspension according to claim 1, characterized in that the guide plate (2) is braced with the axle body (1) separately from the support plate (3) by means of a preferably plate-shaped bracing element (8) in front of the axle body (1).

3. Suspension according to claim 2, characterized in that the rear part of the bracing element (8) and the support plate (3) are together braced to the axle body (1) by means of clamps (9).

4. Suspension according to one of claims 1 to 3, characterized in that the arm (11) of the guide plate (2) lying in front of the clamping (10) of the guide plate (2) has a substantially constant cross section over its length.

5. Suspension according to one of claims 1 to 4, characterized in that the arm (12) of the guide plate (2) lying behind the clamping (10) of the guide plate (2) is constructed as a parabolic spring.

6. Suspension according to one of claims 1 to 5, characterized in that the rear end of the guide plate (2) is hinged to a pivotal limb (13) or is accommodated in a slide shoe (14).

7. Suspension according to one of claims 1 to 6, characterized in that the front arm (11) of the guide plate (2) is inclined somewhat more greatly than the rear arm (12) of the guide plate (2).

8. Suspension according to one of claims 1 to 7, characterized in that the guide plate (2) is slightly curved at least over a part of its length, namely concavely, seen from the axle body (1).

9. Suspension according to one of claims 1 to 8, characterized in that at least the foremost section of the guide plate (2) extends parallel to the front arm (15) of the support plate (3).

10. Suspension according to one of claims 1 to 9, characterized in that at least the foremost section of the guide plate (2) abuts the support plate (3).

11. Suspension according to one of claims 1 to 10, characterized in that the front arm (11) of the guide plate (2) extends parallel to the front arm (15) of the support plate (3) over a substantial part of its length.

12. Suspension according to one of claims 1 to 11, characterized in that the front arm (11) of the guide plate (2) rises from the front to the rear in a sloping manner and the rear arm (12) of the guide plate (2) extends almost horizontally.

**13.** Suspension according to one of claims 1 to 12, characterized in that the guide plate (2) is clamped in an intermediate section (16) of its length, which rises from the front to the rear in a sloping manner more steeply than the front arm (11) and/or the rear arm (12) of the guide plate (2).

**14.** Suspension according to one of claims 1 to 13, whereby a middle intermediate section (17) of the support plate (3), serving for the clamping, extends substantially horizontally and the rear support arm (6) of the support plate (3) is bent from its clamping (18) to the rear bottom approximately in an S-shape, characterized in that the front arm (15) of the support plate (3) rises from the front to the rear in a sloping manner.

**15.** Suspension according to one of claims 2 to 14, characterized in that the bracing element (8) for the guide plate (2) has a joint (19) with joint axis extending perpendicularly to the centre longitudinal plane of the vehicle.

**16.** Suspension according to one of claims 1 to 15, characterized in that the front ends of guide plate (2) and support plate (3) are rolled up so that they abut one another firmly.

**Revendications**

**1.** Suspension pour un essieu de véhicule à corps d'essieu (1) rigide, notamment pour un essieu moteur, comportant, de chaque côté du plan médian longitudinal du véhicule, au moins une lame de guidage (2) supérieure et au moins une lame porteuse (3) inférieure agencée en bras oscillant parabolique, lesquelles lames sont fixées par leur extrémité antérieure à un point d'articulation (5) de préférence commun du châssis (4), constitué par exemple par un axe monté sur le châssis (4) perpendiculairement à l'axe médian longitudinal du véhicule, et sont assujetties entre leurs extrémités antérieure et postérieure sur le corps d'essieu (1), de préférence sur le dessus du corps d'essieu (1), l'extrémité postérieure de la lame de guidage (2) étant montée avec possibilité de déplacement longitudinal sur le châssis (4) et un bras porteur (6) de la lame porteuse (3) qui fait saillie en direction de l'arrière par rapport au corps d'essieu (1) formant un appui inférieur pour un ressort pneumatique (7) sur l'extrémité supérieure duquel repose le châssis (4), caractérisée par le fait que le point d'articulation (5) est situé approximativement à la même hauteur que le corps d'essieu (1) et que la lame de guidage (2) s'étend principalement de l'avant-bas vers l'arrière-haut.

**2.** Suspension selon la revendication 1, caractérisée par le fait que la lame de guidage (2) est fixée indépendamment de la lame porteuse (3) sur le corps d'essieu (1), en avant de celui-ci, au moyen d'un élément de fixation (8) de préférence en forme de plaque.

**3.** Suspension selon la revendication 2, caractérisée par le fait que la partie postérieure de l'élément de fixation (8) et la lame porteuse (3) sont fixées conjointement sur le corps d'essieu (1) au moyen d'étriers de fixation (9).

**4.** Suspension selon l'une des revendications 1 à 3, caractérisé par le fait que le bras (11) de la lame de guidage (2) situé avant le dispositif de fixation (10) de ladite lame de guidage (2) a une section qui est sensiblement constante sur l'ensemble de la longueur du bras.

**5.** Suspension selon l'une des revendications 1 à 4, caractérisé par le fait que le bras (12) de la lame de guidage (2) situé derrière le dispositif de fixation (10) de ladite lame de guidage (2) est agencé sous forme de ressort parabolique.

**6.** Suspension selon l'une des revendications 1 à 5, caractérisée par le fait que l'extrémité postérieure de la lame de guidage (2) est articulée sur un anneau de suspension (13) oscillant ou est montée dans un sabot (14).

**7.** Suspension selon l'une des revendications 1 à 6, caractérisée par le fait que le bras avant (11) de la lame de guidage (2) a une inclinaison légèrement plus forte que le bras arrière (12) de la lame de guidage (2).

**8.** Suspension selon l'une des revendications 1 à 7, caractérisée par le fait que la lame de guidage (2) est légèrement courbée sur une partie au moins de sa longueur et, vu côté corps d'essieu (1), a une forme concave.

**9.** Suspension selon l'une des revendications 1 à 8, caractérisée par le fait que la partie antérieure au moins de la lame de guidage (2) est parallèle au bras avant (15) de la lame porteuse (3).

**10.** Suspension selon l'une des revendications 1 à 9, caractérisée par le fait que la partie antérieure au moins de la lame de guidage (2) est appliqué sur la lame porteuse (3).

11. Suspension selon l'une des revendications 1 à 10, caractérisée par le fait que le bras avant (11) de la lame de guidage (2) est parallèle au bras avant (15) de la lame porteuse (3) sur une partie importante de sa longueur.

12. Suspension selon l'une des revendications 1 à 11, caractérisée par le fait que le bras avant (11) de la lame de guidage (2) monte de l'avant vers l'arrière et le bras arrière (12) de la lame de guidage (2) est pratiquement horizontal.

13. Suspension selon l'une des revendications 1 à 12, caractérisée par le fait que la lame de guidage (2) est fixée par une partie intermédiaire (16) de sa longueur qui monte de l'avant vers l'arrière avec une pente plus forte que celle du bras antérieur (11) et/ou du bras postérieur (12) de la lame de guidage (2).

14. Suspension selon l'une des revendications 1 à 13, une partie intermédiaire (17) de la laine porteuse (3) servant à la fixation s'étendant principalement horizontalement et le bras porteur (6) arrière de la lame porteuse (3) étant plié sensiblement en S vers l'arrière à partir de sa fixation (18), caractérisée par le fait que le bras avant (15) de la lame porteuse (3) monte de l'avant vers l'arrière.

15. Suspension selon l'une des revendications 2 à 14, caractérisée par le fait que l'élément de fixation (8) de la lame de guidage (2) comporte une articulation (19) dont l'axe d'articulation est perpendiculaire au plan médian longitudinal du véhicule.

16. Suspension selon l'une des revendications 1 à 15, caractérisée par le fait que les extrémités antérieures de la lame de guidage (2) et de la lame porteuse (3) sont enroulées en étant appliquées fermement l'une contre l'autre.

FIG.1

EP 0 306 849 B1

FIG. 2

FIG.3

**FIG.4**

**FIG.5**

FIG.6